# EUROPEAN PATENT SPECIFICATION

(11) **EP 2 745 444 B1**
(45) Date of publication and mention of the grant of the patent: **28.02.2018**
(21) Application number: 12738250.5
(22) Date of filing: 20.06.2012
(51) Int. Cl.: H04L 1/00, H04L 1/18

(54) **SECTOR BASED HS-DPCCH TRANSMISSION FOR MULTI-FLOW HSDPA TRANSMISSIONS**
SEKTORBASIERTE HS-DPCCH-ÜBERTRAGUNG FÜR MULTIFLOW-HSDPA-ÜBERTRAGUNGEN
TRANSMISSION HS-DPCCH BASÉE SUR DES SECTEURS, POUR DES TRANSMISSIONS HSDPA MULTI-FLUX

(30) Priority: 04.10.2011 US 201161543066 P
(43) Date of publication of application: 25.06.2014
(73) Proprietor: Telefonaktiebolaget LM Ericsson (publ), 164 83 Stockholm (SE)
(72) Inventor: HULTELL, Johan, SE-169 52 Solna (SE); VON WRYCZA, Peter, SE-114 57 Stockholm (SE)
(74) Representative: Brann AB
(86) International application number: PCT/SE2012/050683
(87) International publication number: WO 2013/051986

(56) References cited:
- WO-A1-2009/120797
- WO-A1-2009/157849
- 3rd Generation Partnership Project; Technical Specification Group Radio Access Network: "High Speed Packet Access (HSDPA) multipoint transmission (Release 11)", , 1 September 2011 (2011-09-01), XP002685577, Retrieved from the Internet: URL:http://www.3gpp.org/ftp/Specs/archive/ 25_series/25.872/25872-b00.zip [retrieved on 2012-10-19] cited in the application
- QUALCOMM INCORPORATED: "On deploying DC-HSDPA UEs in Single Frequency Networks", R1-104157 - 3GPP TSG RAN WG1 MEETING #61-BIS; DRESDEN, GERMANY, 29TH JUNE-JULY 2ND 2010, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, [Online] vol. RAN-WG1, no. 61, 29 June 2010 (2010-06-29), pages 1-13, XP002633072, Retrieved from the Internet: URL:http://www.3gpp.org/ftp/tsg_ran/WG1_RL 1/TSGR1_61b/Docs/R1-104157.zip> [retrieved on 2011-04-14]

## Description

### BACKGROUND

The present invention is generally related to wireless communications and is more particularly related to techniques and apparatus for transmitting feedback information from a mobile terminal, the feedback information relating to downlink transmissions to the mobile terminal on carrier signals from multiple cell sectors.

In the current standards developed by the 3^{rd}-Generation Partnership Project (3GPP) for High-Speed Downlink Packet Access (HSDPA), downlink transmissions to a particular mobile terminal ("user equipment," or "UE," in 3GPP terminology) on one or multiple carriers can only occur from one sector at a given time-instance. Such an operation is referred to as multi-carrier HSDPA and was specified in Releases 8, 9, 10, and 11 of the 3GPP standards. These specifications require that all cells from which downlink transmissions to a particular UE are sent have identical timing, i.e., are time-aligned. For these downlink transmissions, one uplink High-Speed Dedicated Physical Control Channel (HS-DPCCH) is employed for the transmission of acknowledge information (ACK/NACK data) as well as channel quality information (CQI). Since all of the downlink transmissions in these scenarios have identical timing, the time budget available to the UE and base station ("NodeB", or "NB," in 3GPP terminology) for hybrid automatic repeat request (HARQ) processing is independent of the number of downlink carriers for which the UE is configured.

3GPP is beginning the development of standards for multipoint HSDPA transmission. As explained by 3GPP's Radio Access Network (RAN) working group in the technical report, 3GPP TR 25.872, "High Speed Packet Access (HSDPA) multipoint transmission," v. 11.0.0 (Sept. 2011):
*HSPA based mobile internet offerings are becoming very popular and data usage is increasing rapidly. Consequently, HSPA has begun to be deployed on more than one transmit antenna or more than one carrier. As an example, the single cell downlink MIMO (MIMO-Physical layer) feature* was *introduced in Release* 7. *This feature allowed a NodeB to transmit two transport blocks to a single UE from the same cell on a pair of transmit antennas thus improving data rates at high geometries and providing a beamforming advantage to the UE in low geometry conditions. Subsequently, in Release-8 and Release-9, the dual cell HSDPA (DC-HSDPA) and dual band DC-HSDPA features were introduced. Both these features allow the NodeB to serve one or more users by simultaneous operation of HSDPA on two different carrier frequencies in two geographically overlapping cells, thus improving the user experience across the entire cell coverage area. In Release 10 these concepts were extended so that simultaneous transmissions to a single UE could occur from four cells (4C-HSDPA).*
*When a UE falls into the softer or soft handover coverage region of two cells on the same carrier frequency, it would be beneficial for the non-serving cell to be able to schedule packets to this UE and thereby improving this particular user's experience, especially when the non-serving cell is partially loaded. MultiPoint HSDPA allows two cells to transmit packets to the same UE, providing improved user experience and system load balancing. MultiPoint HSDPA can operate on one or two frequencies.*

In the 3GPP TR 25.872 v11.0.0 report, specific reference can be made to the description of the HSDPA multipoint transmission concepts, the impact on implementation, higher layer impact as well as impact on specifications.

Recently, multi-flow HSDPA transmissions has been proposed, where a UE is allowed to receive simultaneous data transmissions from multiple cells, even from cells belonging to different sectors. Unlike with multi-carrier transmissions, where the downlink timing is same for all cells, a UE supporting multi-flow HSDPA transmissions can receive data from different sectors, potentially belonging to different sites. One consequence of this is that the transmissions on the different cells can be associated with different timing.

A HS-DPCCH design solution for multi-flow HSDPA transmissions has been discussed by the 3GPP working group, as can be seen in the above-mentioned technical report 3GPP TR 25.872 v11.0.0, wherein the feedback information of two cells are jointly encoded into the HS-DPCCH by letting the UE pair the HS-PDSCH in transmission-time intervals (TTIs), resulting in maximum overlap. However, the inventors have recognized that although this solution may be working it has drawbacks.

There is thus a need for an improved HS-DPCCH solution for multi-flow HSDSPA transmissions.

### SUMMARY

It is a general object to provide an improved HS-DPCCH solution for multi-flow HSDSPA transmissions.

This object is met by the embodiments as defined by the appended independent claims.

In a first aspect, there is provided a method of transmitting feedback information from a mobile terminal in a wireless communication system, as defined in appended indpendent claim 1.

This opens up for a more flexible HS-DPCCH solution, allowing multiple HS-DPCCHs. In this way, the relevant time budget(s) for the mobile terminal and/or base station may be retained or conserved even for multi-flow HSDPA transmission scenarios, thus avoiding re-transmissions of data.

In a second aspect, there is provided a mobile terminal as defined by appended independent claim 6.

In a third aspect, there is provided a network node as defined by the appended independent claim 10.

Other advantages will be appreciated when reading the detailed description. To facilitate full understanding of the invention, this description includes examples and technical background information that do not fall in the scope of the claimed subject-matter.

### BRIEF DESCRIPTION OF DRAWINGS

The proposed technology, together with further objects and advantages thereof, may best be understood by making reference to the following description taken together with the accompanying drawings, in which:
Figure 1 is a schematic diagram illustrating an example of a scenario in which transmissions to a mobile terminal can occur from cells belonging to different sectors.
Figure 2 is a schematic diagram illustrating an example of another scenario in which transmissions to a mobile terminal can occur from cells belonging to different sectors.
Figure 3 is a schematic diagram illustrating an example of multi-flow HSDPA transmissions from multiple sectors and corresponding transmission of multiple HS-DPCCHs, one per sector.
Figure 4 is a schematic diagram illustrating an example of the relative timing between P-CCPCH and HS-SCCH.
Figure 5 is a schematic diagram illustrating an example of the relative timing relation between the HS-SCCH and HS-PDSCH.
Figure 6 is a schematic diagram illustrating an example of the relative timing relation (at the UE) between HS-PDSCH and HS-DPCCH.
Figure 7 is a schematic diagram illustrating an example of the HARQ time budget for the UE and NodeB when the network has configured a UE with 6 HARQ processes.
Figure 8 is a schematic diagram illustrating an example of the HARQ time budget for a scenario where the NodeB accommodates for the entire reduction in HARQ time budget.
Figure 9 is a schematic diagram illustrating an example of a scenario where a UE is configured for multi-flow HSDPA operation and where there is one carrier (f₁) configured on each sector.
Figure 10 is a schematic diagram illustrating an example of a HARQ time budget for an example where two HS-DPCCHs are used, one per sector.
Figure 11 is a schematic diagram illustrating an example of apparatus for carrying out the techniques described herein.
Figure 12 is a schematic block diagram illustrating an example of a mobile terminal according to an embodiment.
Figure 13 is a schematic block diagram illustrating an example of a network node according to an embodiment.
Figure 14 is a schematic block diagram illustrating an example of a network node according to an embodiment.
Figure 15 is a schematic flow diagram illustrating an example of a method of transmitting feedback information from a mobile terminal according to an embodiment.
Figure 16 is a schematic flow diagram illustrating an example of a method of configuring a mobile terminal to transmit feedback information according to an embodiment.
Figure 17 is a schematic flow diagram illustrating an example of a method of operating a mobile terminal according to an embodiment.
Figure 18 is a schematic flow diagram illustrating an example of a method implemented by one or more network nodes according to an embodiment.

### DETAILED DESCRIPTION

In the discussion that follows, communication scenarios are primarily considered where transmission occurs on multiple cells that do not necessarily belong to the same sector and/or are not time-aligned. Note that as used herein, the term "cell" is generally used to refer to the signal coverage for a certain carrier (frequency) in a given sector, but those skilled in the art will appreciate that the term "cell" may sometimes be used to refer to the carrier signal itself. The term "sector" normally corresponds to a physical "site". Typically, but not always, a macrocell deployment uses 3-sector sites. Each sector can support multiple cells, i.e., can transmit multiple distinct HSDPA carriers. "Multi-carrier HSDPA" refers to a scenario in which all transmissions to a given UE are from cells belonging to the same sector. "Multi-flow HSDPA," on the other hand, refers to a scenario in which the transmissions to a particular UE can occur from cells belonging to different sectors.

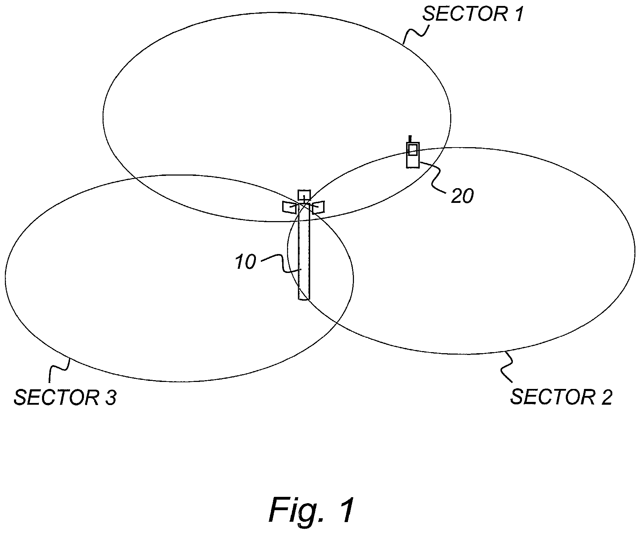

Figure 1 is a schematic diagram illustrating an example of a scenario in which transmissions to a mobile terminal can occur from cells belonging to different sectors. In this particular example, a base station site 10 supports three sectors SECTOR , SECTOR 2, and SECTOR 3. Each sector in turn may support one or more cells, and in a sense a sector may be considered as the set of cell(s) having substantially the "same" coverage. A mobile terminal 20, also referred to as a UE, may be situated in the coverage area of one or more sectors. For multi-flow HSDPA, the mobile terminal 20 may simultaneously receive HSDPA transmissions from cells belonging to multiple sectors of the same site, such as SECTOR 1 and SECTOR 2 in the example of Figure 1.

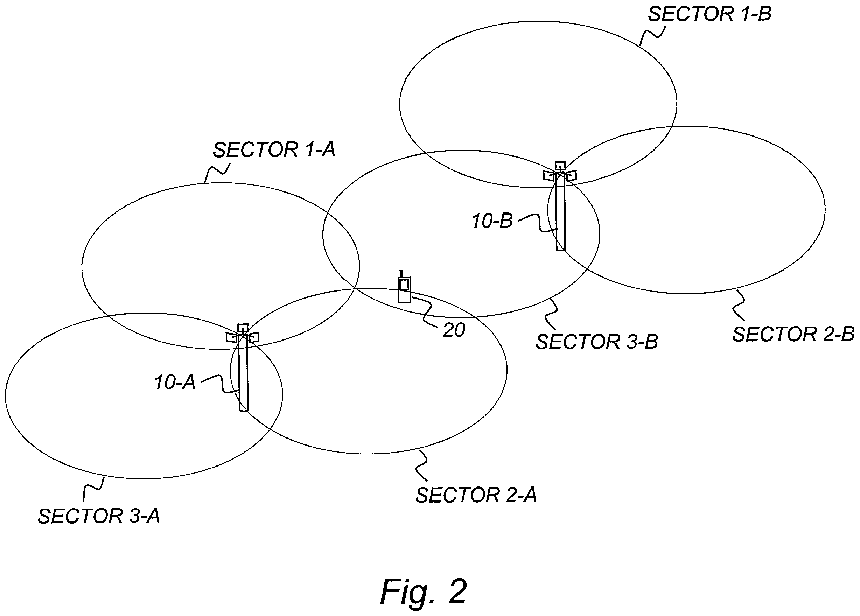

Figure 2 is a schematic diagram illustrating an example of another scenario in which transmissions to a mobile terminal can occur from cells belonging to different sectors. In the example of Figure 2, there are two base station sites 10-A, 10-B, each of which supports multiple sectors. Base station site 10-A supports sectors SECTOR 1-A, SECTOR 2-A, SECTOR 3-A. Base station site 10-B supports sectors SECTOR 1-B, SECTOR 2-B, SECTOR 3-B. Here, the mobile terminal 20 may simultaneously receive HSDPA transmissions from cells belonging to multiple sectors belonging to different physical sites, such as SECTOR 2-A and SECTOR 3-B.

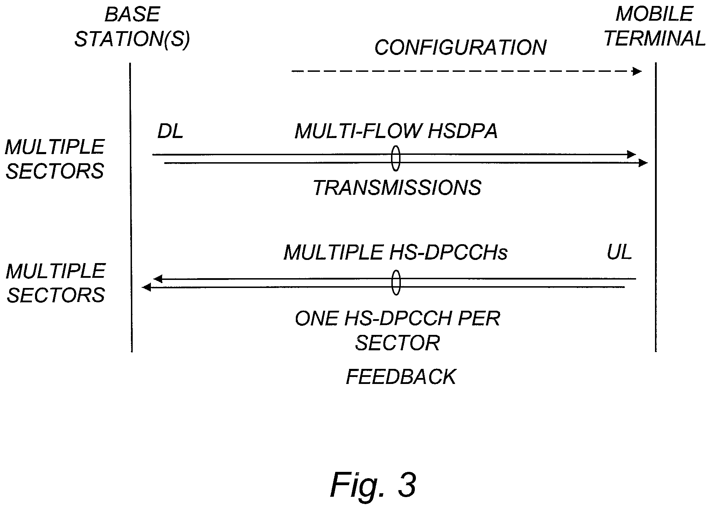

Figure 3 is a schematic diagram illustrating an example of multi-flow HSDPA transmissions from multiple sectors and corresponding transmission of multiple HS-DPCCHs, one per sector. According to the proposed technology feedback information is transmitted from a mobile terminal in a wireless communication system. The feedback information relates to multi-flow High-Speed Downlink Packet Access, HSDPA, transmissions to the mobile terminal from cells belonging to multiple cell sectors. A basic idea of the proposed technology is to transmit multiple High-Speed Dedicated Physical Control Channels, HS-DPCCHs, one HS-DPCCH for each sector, such that different HS-DPCCH channels are used to carry feedback information for cells that belong to different sectors.

A basic idea according to the proposed technology is also to configure the mobile terminal to transmit multiple HS-DPCCHs, carrying feedback information relating to the HSDPA transmissions, one HS-DPCCH for each sector. This configuration may be provided by a base station, such as a NodeB, or some other network node, such as a Radio Network Controller and signaled to the relevant mobile terminal for local configuration in the mobile terminal. By way of example, the network node may provide configuration parameter(s) regarding the number of HS-DPCCHs, and possibly also power setting and format of each of the HS-DPCCHs, and signal the configuration parameter(s) to the mobile terminal.

This opens up for a more flexible HS-DPCCH solution, allowing multiple HS-DPCCHs. In this way, the relevant time budget(s) for the mobile terminal and/or base station may be retained or conserved even for multi-flow HSDPA transmission scenarios, thus avoiding re-transmissions of data.

This is especially true if the timing used for each HS-DPCCH is coupled to the timing associated with the downlink cell(s), i.e. the corresponding downlink carrier(s), of the sector for which the HS-DPCCH is carrying feedback information. In effect, this generally means that the multiple HS-DPCCHs will have different timing. By way of example, the feedback information may include acknowledge information, channel quality information and/or pre-coding information.

According to several embodiments of the present invention, a HS-DPCCH feedback solution is used where different HS-DPCCH physical channels are used to carry the downlink related feedback information for downlink cells that belong to different sectors. Thus, for example, if the UE is configured with two downlink cells that are spread over two sectors, the UE transmits two physical HS-DPCCHs, one for each sector. The timing used for each HS-DPCCH is coupled to the timing associated with the downlink cells that are transmitted in the sector for which the particular HS-DPCCH is carrying feedback information. This approach thus permits multiple HS-DPCCHs from a given UE, where the multiple HS-DPCCHs have different timing.

Embodiments include methods whereby a network node, such as a NodeB or a Radio Network Controller, configures a UE to transmit multiple HS-DPCCH, one HS-DPCCH for each sector, in the case where the UE is configured to receive downlink HSDPA transmissions from multiple sectors simultaneously. The timing of each HS-DPCCH is coupled to the downlink timing for the downlink cells for which the HS-DPCCH is carrying feedback information. If it is furthermore required that all downlink cells transmitted on the same sector have the same downlink timing then it is straightforward to extend the reasoning below to the case where the more than one cell per sector has been configured. By way of example, feedback information related to cells on the same sector may be transmitted on the HS-DPCCH corresponding to that sector.

Other embodiments include methods implemented by one or more network nodes, such as one or more NodeBs, where the method includes transmitting a HSDPA carrier to a particular UE from each of two sectors (on the same or on different NodeBs), receiving multiple HS-DPCCH transmissions from the UE carrying HARQ information corresponding to the two HSDPA transmissions, and retrieving the HARQ information from the two HS-DPCCH transmissions. In some embodiments, the received HS-DPCCHs have been transmitted on two different channelization codes, in which case the HARQ information for each HS-DPCCH is retrieved by de-spreading the HS-DPCCH using its corresponding channelization code. In other embodiments, the HS-DPCCHs are transmitted on different branches of the same channelization code (I/Q-multiplexed), in which case the HARQ information for each HS-DPCCH is retrieved by separately demodulating the in-phase (I) and quadrature (Q) branches of the received HS-DPCCH signals.

Other embodiments include methods implemented in a UE, the methods comprising receiving a HSDPA carrier from each of two sectors (on the same or on different NodeBs), wherein the two HSDPA carriers have different timing, and transmitting a separate HS-DPCCH corresponding to each of the HSDPA carriers, with HARQ feedback information for the corresponding carriers, wherein the timing of each HS-DPCCH is coupled to the downlink timing for the corresponding HSDPA carrier. In some embodiments, the HS-DPCCHs are transmitted on two different channelization codes. In others, the HS-DPCCHs are transmitted on different branches of the same channelization code (I/Q-multiplexed).

Still other embodiments of the invention include network nodes (including NodeBs and UEs) comprising processing circuits (such as a CPU and associated program memory) that are configured to carry out one or more of the methods summarized above and described in detail below.

In the following, for a better understanding of the invention, a short overview will be made of the current developments of multi-flow HSDPA transmissions in the Work Item no. RP-111375 (September 2011) and the solution proposed by the 3GPP working group in the technical report 3GPP TR 25.872 v11.0.0 (September 2011).

During the 3GPP TSG RAN Meeting #53 held in Fukuoka, Japan, September 13-16, 2011, a Work Item (WI) on multi-flow HSDPA transmissions was started, with the goal of developing specifications that allow a UE to receive simultaneous data transmissions from multiple cells. The WI no. RP-111375 is accessible from the webpage of the 3rd Generation Partnership Project, (3GPP), at http://www.3gpp.org.

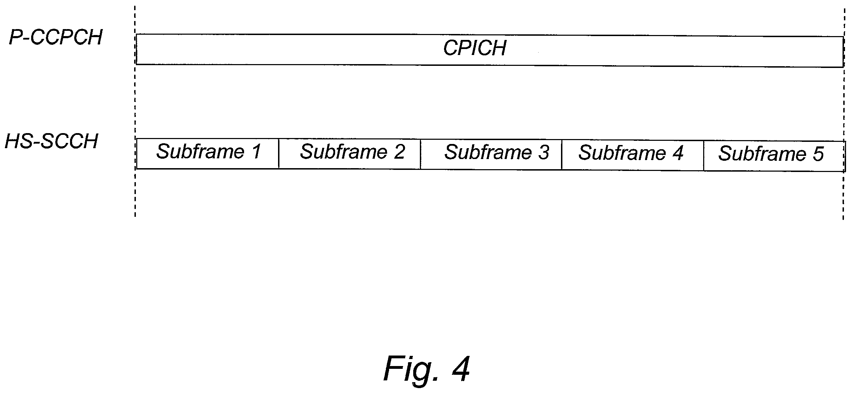

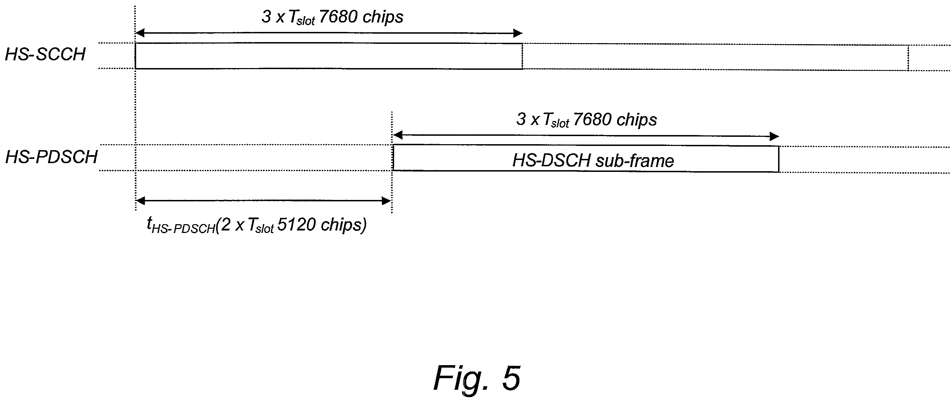

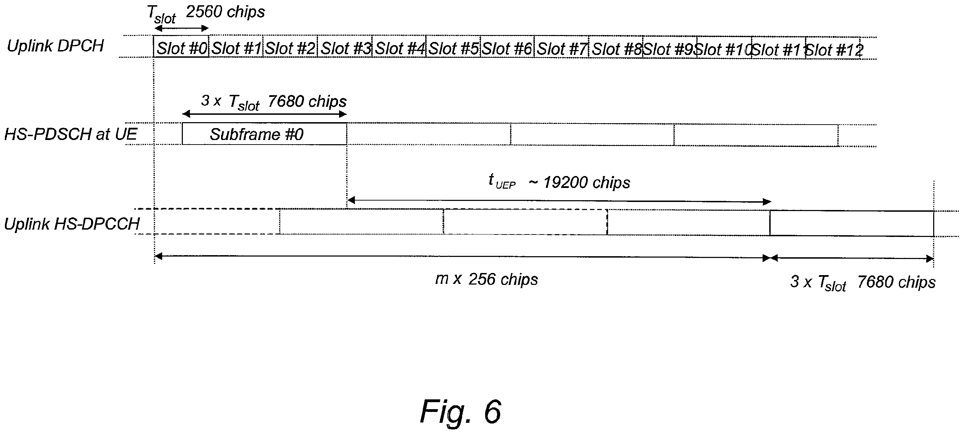

Unlike with multi-carrier transmissions, where the downlink timing is same for all cells, a UE supporting multi-flow transmissions can receive data from different sectors, potentially belonging to different sites. One consequence of this is that the transmissions on the different cells can be associated with different timing. Furthermore, different cells belonging to the same site are usually configured with timing delays to, e.g., reduce the acquisition delay associated with the Shared Channel (SCH-channel). An example of this is illustrated in Figures 4, 5, and 6. Figure 4 illustrates the relative timing of the Primary Common Control Physical Channel (P-CCPCH) and the High-Speed Shared Control Channel (HS-SCCH), given a certain downlink timing delay *T_{cell}.* Figure 5 illustrates the relative timing of the HS-SCCH and the High-Speed Physical Downlink Shared Channel (HS-PDSCH), given the same timing delay, while Figure 6 illustrates the relative timing of the HS-PDSCH and the HS-DPCCH, again given the same timing delay.

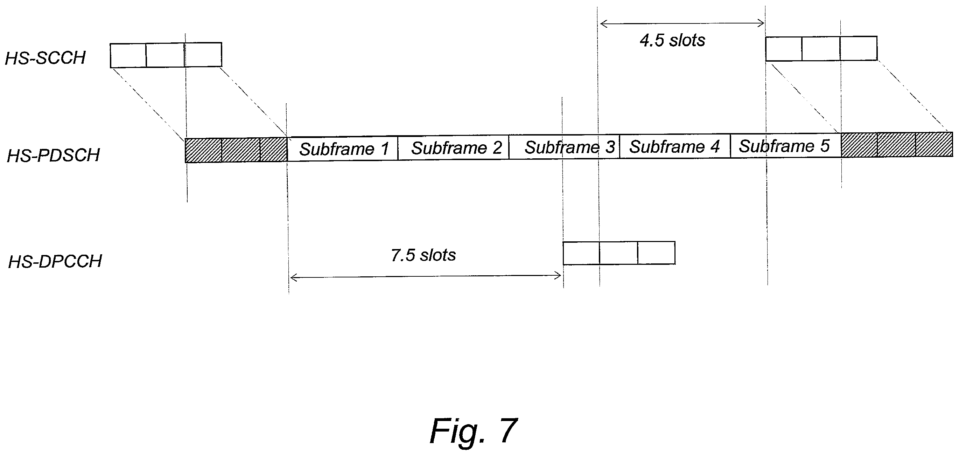

Based on the existing timing relations, Figure 7 illustrates the HARQ timing budget for the UE and NodeB. More particularly, the UE has 7.5 slots from receiving the HS-PDSCH to generate the HS-DPCCH. The NodeB on the other hand has 4.5 slots from receiving the HS-DPCCH to perform HARQ-ACK decoding, and subsequent scheduling for the upcoming Transmission Time Interval, TTI, and allocating the required resources. It should be noted that the propagation delay *T_{P}* has been ignored; if one also were to account for the propagation delay, the HARQ time budget of the NodeB would be 4.5 - 2*T_{P}* slots.

Without loss of generality, the following discussion is directed to a scenario where the UE is configured with only two cells, having different timing. It is straightforward to extend the concepts presented here to scenarios where UEs are configured with multiple cells per sector. Accordingly, for example, a description of a technique as applying to two HSDPA cells, one transmitted from each of two sectors, should not be understood to preclude the application of that technique in a situation where two or more cells are transmitted from one or both of the sectors. Thus the proposed technology is applicable to at least Single Frequency Dual Cell HSDPA, SF-DC-HSDPA, Dual Frequency Dual Cell HSDPA, DF-DC-HSDPA, and Dual Frequency Four/Quad Cell HSDPA, DF-4C/Q-HSDPA, as well as extensions to more frequencies and more cells. SF-DC-HSDPA allows HSDPA transmissions from two cells of different sectors on the same carrier frequency. DF-DC-HSDPA allows HSDPA transmissions from two cells of different sectors on two different frequencies. DF-4C/Q-HSDPA allows HSDPA transmissions from four cells of different sectors on two different frequencies; e.g. where the cells reside in two different sectors or four different sectors.

One HS-DPCCH design option is to jointly encode the HS-DPCCH of both cells by letting the UE pair the HS-PDSCH in transmission-time intervals (TTIs), resulting in maximum overlap. This solution has been discussed by the 3GPP working group, as can be seen in the technical report issued by that group, 3GPP TR 25.872, "High Speed Packet Access (HSDPA) multipoint transmission," v. 11.0.0 (Sept. 2011). However, although a working solution, such an approach has some drawbacks, as listed below.

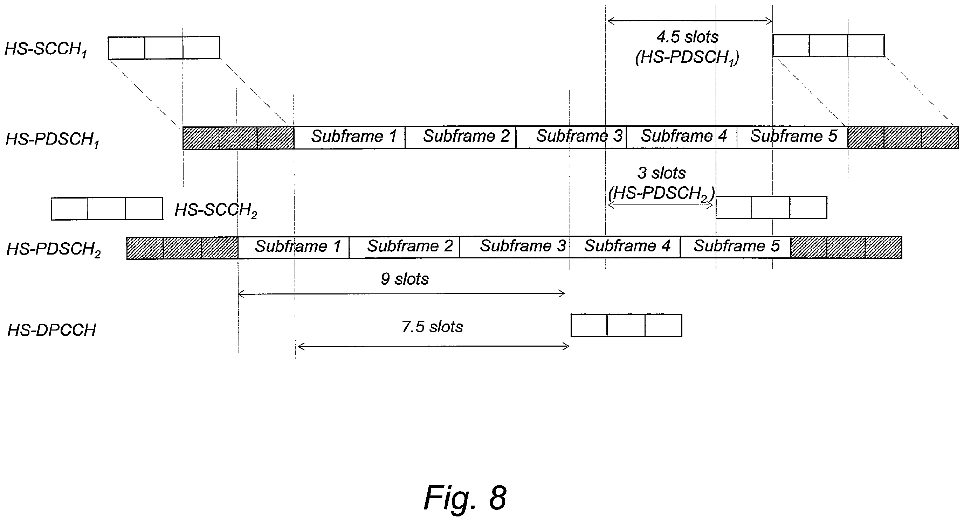

Under the assumption that UEs always pairs the two HS-PDSCH so as to achieve maximum overlap, the relative decrease in the existing overall HARQ time budget can be up to 1.5 slots. This reduction in time budget must be taken by the NodeB, or the UE, or by some combination of both. An example scenario where the NodeB takes the entire reduction in the time budget is illustrated in Figure 8. In the example of Figure 8, the NodeB only has 3 time slots from receiving the HS-DPCCH for the HARQ-ACK decoding, scheduling and resource allocation for HS-PDSCH₂.

Another drawback of jointly encoding HARQ-ACK and/or PCI/CQI information of different cells associated with different timing references (clocks) is that new events need to be introduced to account for potential timing drifts between the two cells. In other words, the two HS-PDSCH TTIs that should be paired may change over time, and this must be accommodated by the joint encoding solution. As a result, this solution is likely to require, for example, non-trivial intervention by the Radio Network Controller (RNC), which is not desirable. Furthermore, this type of event would increase the load on the RNC.

There is thus a need for an improved HS-DPCCH solution for multi-flow HSDSPA transmissions.

An example of a new approach, according to the proposed technology, uses a HS-DPCCH feedback solution where different HS-DPCCH physical channels are used to carry the downlink related feedback information for downlink cells that belong to different sectors. Thus, for example, if the UE is configured with two downlink cells that are spread over two sectors, the UE transmits two physical HS-DPCCHs, one for each sector. The timing used for each HS-DPCCH may be coupled to the timing associated with the downlink cells that are transmitted in the sector for which the particular HS-DPCCH is carrying feedback information. This approach thus permits multiple HS-DPCCHs from a given UE, where the multiple HS-DPCCHs have different timing.

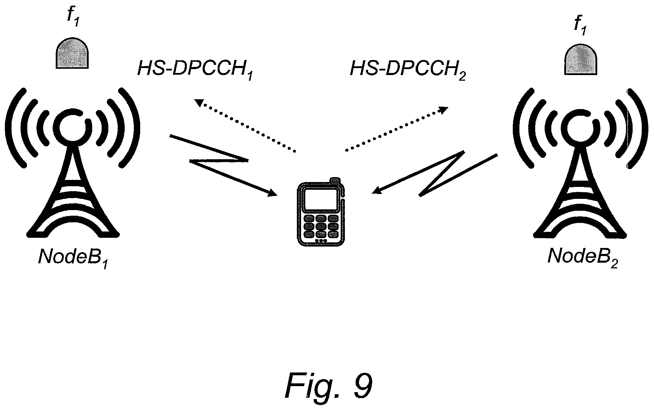

Embodiments of this approach include methods whereby the network configures a UE to transmit one HS-DPCCH for each sector in the situation where the UE is configured to receive downlink HSDPA transmissions from multiple sectors simultaneously. The timing of each HS-DPCCH may be coupled to the downlink timing for the downlink cells for which the HS-DPCCH is carrying feedback information. In other words, if the UE is configured with multi-flow HSDPA with one downlink cell transmitted from each sector, here exemplified as Single Frequency Dual Cell HSDPA, SF-DC-HSDPA as shown in Figure 9, the timing for the HS-DPCCH carrying the downlink related feedback (HARQ-ACK and PCI/CQI) information, i.e., HS-DPCCH₁ and HS-DPCCH₂ in the figure, use the downlink timing associated with NodeB₁ and NodeB₂ respectively. If it is also required that all downlink cells transmitted on the same sector have the same downlink timing then it is straightforward to extend the reasoning to the case where more than one cell per sector has been configured.

In some embodiments, the HS-DPCCHs are transmitted on two different channelization codes. In other embodiments, the HS-DPCCHs are transmitted on different branches of the same channelization code (I/Q-multiplexed).

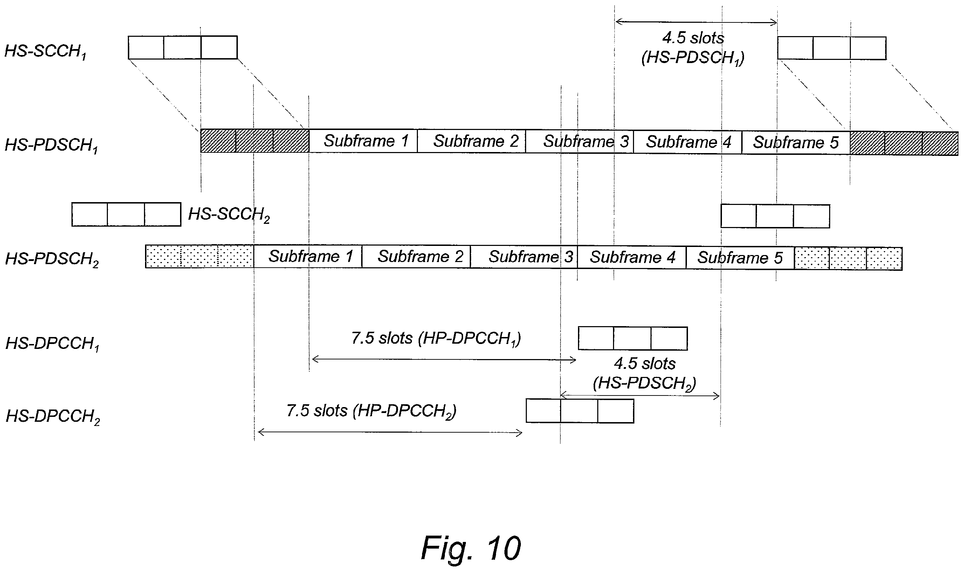

Given the scenario illustrated in Figure 9 and using the same assumptions that produced the reduced HARQ time budget in Figure 8, Figure 10 illustrates the proposed HARQ time budget situation when two HS-DPCCHs are used. For each HS-DPCCH, the timing of the HS-DPCCH is set in relation to the received High-Speed Physical Downlink Shared Channel, HS-PDSCH, from the respective sector. This is typically performed, for each HS-DPCCH, by the mobile terminal based on the corresponding received HS-PDSCH. For each HS-DPCCH, the existing HS-DPCCH coding can be reused. To exemplify, if the UE for a certain sector is only configured with a single cell, the HS-DPCCH encoding for this cell can reuse the encoding specified in Release 5 of the 3GPP specifications. Similarly, if a UE for a certain sector is configured with two cells (without MIMO), the HS-DPCCH encoding specified in Release 8 of the 3GPP specifications can be reused. However, it is also possible to modify the existing encoding. Thus, in some embodiments, rather than transmitting jointly encoded CQIs for the case where a UE has two carriers on the same sector configured, the UE instead transmits the CQIs in a time-multiplexed fashion.

For the HARQ-ACK transmissions the existing HARQ-ACK codebook can also be reused when the cells are configured to operate in MIMO mode.

The techniques and apparatus described herein avoid reducing the HARQ time budget for the UE and/or Node-B for the multi-flow HSDPA transmission scenario. These techniques and apparatus also avoid the introduction of new network events to handle situations when the cells have different time references, and there is a timing drift. Finally, in several embodiments of the disclosed techniques, existing HARQ-ACK codebooks (for the number of downlink cells carried on a certain sector) can be reused.

A summary of one example embodiment of these techniques is described in the appended Appendix and forms an integral part of this disclosure. Those skilled in the art will appreciate that the techniques proposed therein do not represent the full range of combinations and techniques contemplated by the present inventors and described above.

Embodiments of the various techniques described above include methods implemented in a mobile terminal, such as a UE configured to receive multi-flow HSDPA transmissions. In some embodiments, as described above, the methods comprise receiving a HSDPA carrier from each of two sectors (on the same or on different NodeBs), wherein the two HSDPA carriers have different timing, and transmitting a separate HS-DPCCH corresponding to each of the HSDPA carriers, with HARQ feedback information for the corresponding carriers, wherein the timing of each HS-DPCCH is coupled to the downlink timing for the corresponding HSDPA carrier. In some embodiments, the HS-DPCCHs are transmitted on two different channelization codes. In others, the HS-DPCCHs are transmitted on different branches of the same channelization code (I/Q-multiplexed).

Other embodiments include methods implemented by one or more network nodes, such as one or more NodeBs, where the method includes transmitting a HSDPA carrier to a particular UE from each of two sectors (on the same or on different NodeBs), receiving multiple HS-DPCCH transmissions from the UE carrying HARQ information corresponding to the two HSDPA transmissions, and retrieving the HARQ information from the two HS-DPCCH transmissions. In some embodiments, the received HS-DPCCHs have been transmitted on two different channelization codes, in which case the HARQ information for each HS-DPCCH is retrieved by de-spreading the HS-DPCCH using its corresponding channelization code. In other embodiments, the HS-DPCCHs are transmitted on different branches of the same channelization code (I/Q-multiplexed), in which case the HARQ information for each HS-DPCCH is retrieved by separately demodulating the in-phase (I) and quadrature (Q) branches of the received HS-DPCCH signals. Those skilled in the art will appreciate that the various methods described may be used in combination with each other except when two or more techniques are clearly described as exclusive alternatives to one another.

Still other embodiments of the invention include network nodes comprising processing circuits (such as a CPU and associated program memory) that are configured to carry out one or more of the techniques described above for configuring a UE and/or for receiving multiple HS-DPCCH transmissions from a given UE. Still further embodiments comprise UEs that comprise processing circuits (again, such as a CPU and associated program memory) that are configured to carry out one or more of the techniques described above for transmitting multiple HS-PDCCHs to carry HARQ feedback for HSDPA carriers received from multiple sectors of a wireless network.

The steps, functions, procedures and/or blocks described above may be implemented in hardware using any conventional technology, such as discrete circuit or integrated circuit technology, including both general-purpose electronic circuitry and application-specific circuitry.

Alternatively, at least some of the steps, functions, procedures and/or blocks described above may be implemented in software for execution by a suitable computer or processing device such as a microprocessor, Digital Signal Processor (DSP) and/or any suitable programmable logic device such as a Field Programmable Gate Array (FPGA) device and a Programmable Logic Controller (PLC) device.

It should also be understood that it may be possible to re-use the general processing capabilities of any conventional unit. It may also be possible to re-use existing software, e.g. by reprogramming of the existing software or by adding new software components.

The software may be realized as a computer program product, which is normally carried on a computer-readable medium, for example a CD, DVD, USB memory, hard drive or any other conventional memory device. The software may thus be loaded into the operating memory of a computer for execution by the processor of the computer. The computer/processor does not have to be dedicated to only execute the above-described steps, functions, procedure and/or blocks, but may also execute other software tasks.

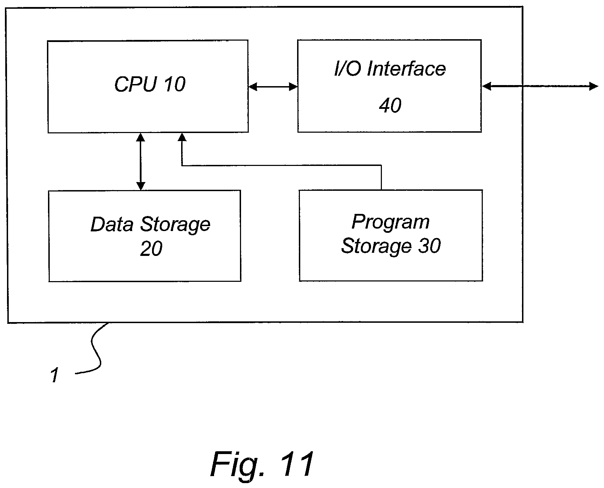

Figure 11 is a schematic illustration of a node 1 in which a method embodying any of the presently described techniques can be implemented. The features of Figure 11 correspond to elements of a mobile terminal configured to carry out the techniques described herein, in some embodiments, and correspond to elements of a complementary eNodeB or other base station apparatus in others. Those skilled in the art will appreciate that the details of the circuits for each of these embodiments will vary substantially, depending on whether a base station or UE implementation is contemplated, but will further appreciate that the detailed design of the various circuits for these devices is well known, but for the adaptation of these devices to carry out the techniques disclosed herein.

Referring once again to Figure 11, a computer program for controlling the node 1 to carry out a method embodying any of the techniques described above is stored in a program storage 30. Data used during the performance of a method embodying the present invention is stored in a data storage 20. During performance of a method embodying the present invention, program steps are fetched from the program storage 30 and executed by a Central Processing Unit (CPU) 10, retrieving data as required from the data storage 20. Output information resulting from performance of a method embodying the present invention can be stored back in the data storage 20, or sent to an Input/Output (I/O) interface 40, which may comprise a transmitter for transmitting data to other nodes, as required. Likewise, the Input/Output (I/O) interface 40 may comprise a receiver for receiving data from other nodes, for example for use by the CPU 10.

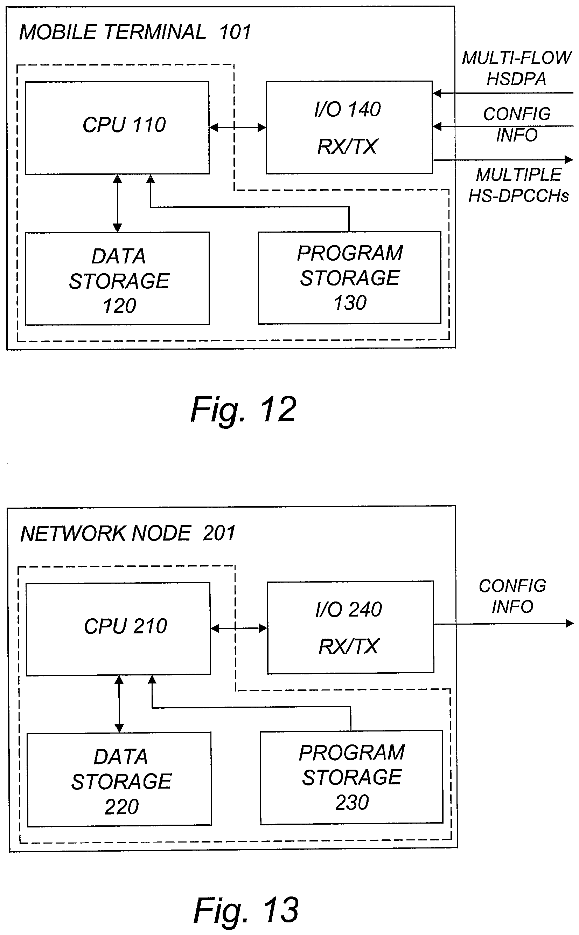

Figure 12 is a schematic block diagram illustrating an example of a mobile terminal according to an embodiment. In this particular example, the mobile terminal 101 basically includes a CPU 110, a data storage 120, a program storage 130 and an I/O circuit 140 having a receiver (RX) and a transmitter (TX). The mobile terminal 101 is configured to receive multi-flow High-Speed Downlink Packet Access, HSDPA, transmissions from cells belonging to multiple sectors and transmitting feedback information relating to the HSDPA transmissions.

The mobile terminal 101 is configured to transmit multiple High-Speed Dedicated Physical Control Channels, HS-DPCCHs, one HS-DPCCH for each sector, such that different HS-DPCCH channels are used to carry feedback information for cells that belong to different sectors.

Preferably, the mobile terminal 101 receives basic configuration information concerning the HS-DPCCHs from the network side.

The mobile terminal 101 is typically configured such that the timing used for each HS-DPCCH is coupled to the timing associated with the downlink cell(s) of the sector for which the HS-DPCCH is carrying feedback information.

The mobile terminal 101 is then normally configured to transmit the multiple HS-DPCCHs with different timing.

The mobile terminal 101 may be configured to transmit feedback information related to several cells on the same sector on the HS-DPCCH corresponding to that sector.

In a particular example, the mobile terminal 101 may be configured for receiving a High-Speed Downlink Packet Access, HSDPA, carrier from each of two sectors, and for transmitting, for each of these HSDPA carriers, a separate High-Speed Dedicated Physical Control Channel, HS-DPCCH, with feedback information for the corresponding carrier.

As an example, the HS-DPCCHs may be transmitted on different channelization codes. Alternatively, the HS-DPCCHs are transmitted on different branches of the same channelization code.

By way of example, the feedback information may include Hybrid Automatic Repeat request, HARQ, feedback information.

Figure 13 is a schematic block diagram illustrating an example of a network node according to an embodiment. In this particular example, the network node 201 basically includes a CPU 210, a data storage 220, a program storage 230 and an I/O circuit 240 having a receiver (RX) and a transmitter (TX). The network node 201 is adapted to configure a mobile terminal to transmit feedback information in a wireless communication system, the feedback information relating to multi-flow High-Speed Downlink Packet Access, HSDPA, transmissions to the mobile terminal from cells belonging to multiple cell sectors, also referred to as sectors.

The network node 201 is adapted to configure the mobile terminal to transmit multiple High-Speed Dedicated Physical Control Channels, HS-DPCCHs, carrying feedback information relating to the HSDPA transmissions, one HS-DPCCH for each sector.

By way of example, the network node 201 is configured to transmit configuration information to the relevant mobile terminal, e.g. in the form of one or more configuration parameters regarding the number of HS-DPCCHs, and possibly also power setting and format of each of the HS-DPCCHs.

Preferably, the network node 201 is adapted to allow configuration of the timing of each HS-DPCCH to be coupled to the downlink timing for the downlink cell(s) for which the HS-DPCCH is carrying feedback information.

For example, the network node 201 will be adapted to allow configuration, for each HS-DPCCH, of the timing of the HS-DPCCH in relation to the received High-Speed Physical Downlink Shared Channel, HS-PDSCH, from the respective sector.

As an example, the network node 201 may be a NodeB or a Radio Network Controller.

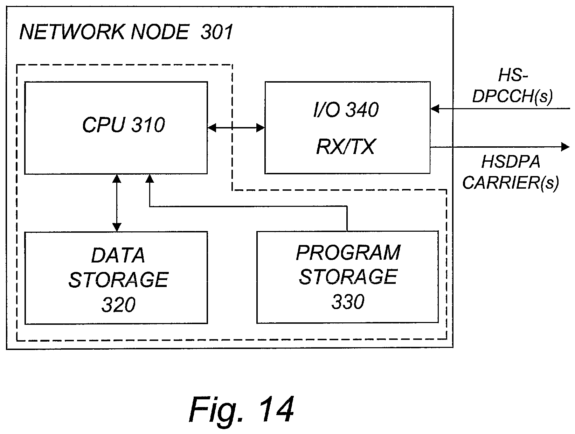

Figure 14 is a schematic block diagram illustrating an example of a network node according to an embodiment. In this particular example, the network node 301 basically includes a CPU 310, a data storage 320, a program storage 330 and an I/O circuit 340 having a receiver (RX) and a transmitter (TX).

The network node 301 is configured for transmitting a High-Speed Downlink Packet Access, HSDPA, carrier to a particular mobile terminal from each of two sectors, and receiving multiple High-Speed Dedicated Physical Control Channel, HS-DPCCH, transmissions from the mobile terminal carrying feedback information corresponding to the HSDPA transmissions, and retrieving the feedback information from the HS-DPCCH transmissions.

Preferably, the HSDPA carriers have different timing, and the timing of each HS-DPCCH is coupled to the downlink timing for the corresponding HSDPA carrier.

In a particular example, the received HS-DPCCHs have been transmitted on different channelization codes, and the feedback information for each HS-DPCCH is retrieved by de-spreading the HS-DPCCH using its corresponding channelization code.

In another example, the received HS-DPCCHs have been transmitted on different branches of the same channelization code, and the feedback information for each HS-DPCCH is retrieved by separately demodulating the branches of the received HS-DPCCHs.

By way of example, the feedback information includes Hybrid Automatic Repeat request, HARQ, feedback information.

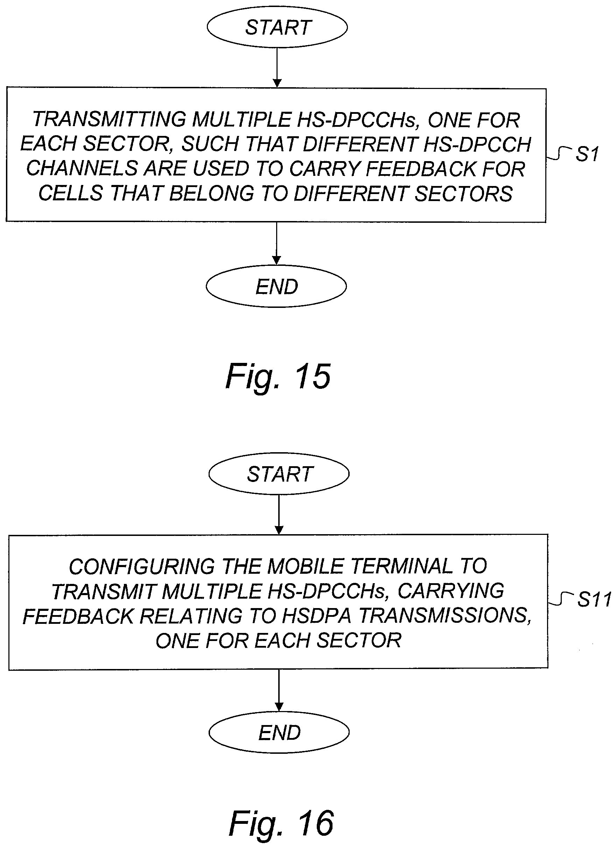

Figure 15 is a schematic flow diagram illustrating an example of a method of transmitting feedback information from a mobile terminal according to an embodiment.

In this method, the feedback information is relating to multi-flow High-Speed Downlink Packet Access, HSDPA, transmissions to the mobile terminal from cells belonging to multiple cell sectors, simply referred to as sectors. Basically, the method comprises transmitting multiple High-Speed Dedicated Physical Control Channels, HS-DPCCHs, one HS-DPCCH for each sector, such that different HS-DPCCH channels are used to carry feedback information for cells that belong to different sectors, as indicated in step S1.

Preferably, the timing used for each HS-DPCCH is coupled to the timing associated with the downlink cell(s) of the sector for which the HS-DPCCH is carrying feedback information.

Normally, this means that the multiple HS-DPCCHs have different timing.

In a particular example, for each HS-DPCCH, the timing of the HS-DPCCH is set in relation to the received High-Speed Physical Downlink Shared Channel, HS-PDSCH, from the respective sector.

If there are several cells on the same sector, the feedback information related to cells on the same sector are typically transmitted on the HS-DPCCH corresponding to that sector.

As an example, the feedback information includes acknowledge information, channel quality information and/or pre-coding information.

Figure 16 is a schematic flow diagram illustrating an example of a method of configuring a mobile terminal to transmit feedback information according to an embodiment.

The feedback information is generally relating to multi-flow High-Speed Downlink Packet Access, HSDPA, transmissions to the mobile terminal from cells belonging to multiple cell sectors, also referred to as sectors. Basically, the method comprises configuring the mobile terminal to transmit multiple High-Speed Dedicated Physical Control Channels, HS-DPCCHs, carrying feedback information relating to the HSDPA transmissions, one HS-DPCCH for each sector, as indicated in step S11.

Preferably, the timing of each HS-DPCCH is allowed to be coupled to the downlink timing for the downlink cell(s) for which the HS-DPCCH is carrying feedback information.

Normally, the multiple HS-DPCCHs will have different timing.

In a particular example, as mentioned above, for each HS-DPCCH, the timing of the HS-DPCCH is allowed to be set in relation to the received High-Speed Physical Downlink Shared Channel, HS-PDSCH, from the respective sector.

For example, the method may be performed by a network node such as a NodeB or a Radio Network Controller.

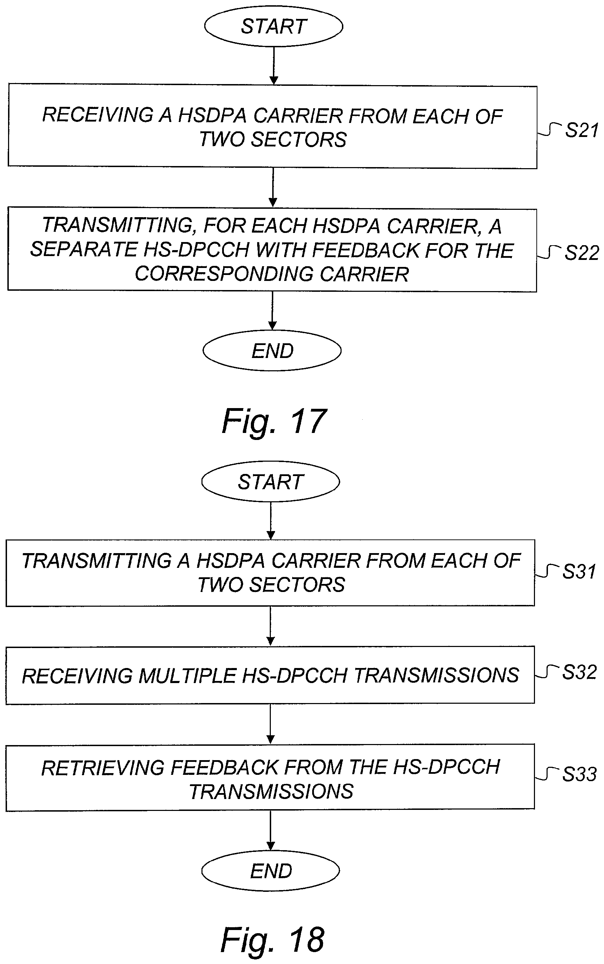

Figure 17 is a schematic flow diagram illustrating an example of a method of operating a mobile terminal according to an embodiment.

In this example, the method comprises receiving a High-Speed Downlink Packet Access, HSDPA, carrier from each of two sectors, as indicated in step S21, and transmitting, for each of the HSDPA carriers, a separate High-Speed Dedicated Physical Control Channel, HS-DPCCH, with feedback information for the corresponding carrier, as indicated in step S22.

Preferably, the HSDPA carriers have different timing, and the timing of each HS-DPCCH is coupled to the downlink timing for the corresponding HSDPA carrier.

In a particular example, the HS-DPCCHs are transmitted on different channelization codes. Alternatively, the HS-DPCCHs are transmitted on different branches of the same channelization code.

As an example, the feedback information includes Hybrid Automatic Repeat request, HARQ, feedback information.

The above method is preferably carried out by a mobile terminal such as the mobile terminal shown in Fig. 12.

Figure 18 is a schematic flow diagram illustrating an example of a method implemented by one or more network nodes according to an embodiment.

In this example, the method comprises transmitting a High-Speed Downlink Packet Access, HSDPA, carrier to a particular mobile terminal from each of two sectors, as indicated in step S31. The method further comprises receiving multiple High-Speed Dedicated Physical Control Channel, HS-DPCCH, transmissions from the mobile terminal carrying feedback information corresponding to the HSDPA transmissions, as indicated in step S32, and retrieving the feedback information from the HS-DPCCH transmissions, as indicated in step S33.

Preferably, the HSDPA carriers have different timing, and the timing of each HS-DPCCH is coupled to the downlink timing for the corresponding HSDPA carrier.

By way of example, the received HS-DPCCHs may have been transmitted on different channelization codes, and the feedback information for each HS-DPCCH is then retrieved by de-spreading the HS-DPCCH using its corresponding channelization code.

Alternatively, the received HS-DPCCHs may have been transmitted on different branches of the same channelization code, and the feedback information for each HS-DPCCH is then retrieved by separately demodulating the branches of the received HS-DPCCHs.

The feedback information may for example include Hybrid Automatic Repeat request, HARQ, feedback information.

The above method may be carried out by one or more network nodes, such as the network node shown in Fig. 14.

It will be appreciated by the person of skill in the art that various modifications may be made to the above described embodiments without departing from the scope of the present invention as defined by the appended claims. For example, it will be readily appreciated that although the above embodiments are described with reference to parts of a 3GPP network, an embodiment of the present invention will also be applicable to like networks, such as a successor of the 3GPP network, having like functional components. Therefore, in particular, the terms 3GPP and associated or related terms used in the above description and in the enclosed drawings and any appended claims now or in the future are to be interpreted accordingly.

### ABBREVIATIONS

- CPICH: Common Pilot Channel
- E-DCH: Enhanced Uplink Channel
- E-RGCH: E-DCH Relative Grant Channel
- E-DPDCH: E-DCH Dedicated Physical Data Channel
- F-DPCH: Fractional DPCH
- TPC: Transmit Power Control
- TDM: Time Division Multiplexing
- ILPC: Inner Loop Power Control
- OLPC: Outer Loop Power Control
- TTI: Transmission Time Interval
- RLC: Radio Link Control
- RRC: Radio Resource Control
- RNC: Radio Network Controller
- SHO: Soft Hand Over
- SIR: Signal to Interference Ratio
- HARQ-ACK: Hybrid Automatic Repeat request ACKnowledgement
- CQI/PCI: Channel Quality Information/Pre-Coding Information
- 3GPP: The Third Generation Partnership Program
- DPCCH: Downlink Physical Control Channel
- HARQ: Hybrid Automatic Repeat reQuest
- WCDMA/HSPA: Wideband Code Division Multiple Access/High Speed Packet Access
- HSDPA: High-Speed Downlink Packet Access
- HS-DPCCH: High-Speed Dedicated Physical Control Channel
- HS-PDSCH: High-Speed Physical Downlink Shared Channel
- RAN: Radio Access Network
- UE: User Equipment
- UL: Uplink

### APPENDIX

### HS-DPCCH for Multi-Flow HSDPA transmissions

### Introduction

A scenario with multi-flow HSDPA transmissions is envisaged where a UE can receive data transmissions from multiple cells simultaneously. Unlike the multi-carrier HSDPA operation specified in Rel-8/9/10/11, where it was required that all cells on which the downlink transmissions occurred to a particular UE had identical timing, a UE configured for multi-flow HSDPA operation can receive data from different, potentially uncoordinated, cells. Different downlink timing will impact the HS-DPCCH timing and this is the topic discussed in this contribution. Two alternative solutions are outlined. The first is based on that the UE jointly encodes HARQ-ACK information for all cells and transmit the information on a single HS-DPCCH. The other solution is based on that one HS-DPCCH per sector is used by a UE configured with multi-flow HSDPA. The latter solution avoids reducing the HARQ time budget for the UE and NodeB and may therefore be a preferred solution.

### Background

Given a certain downlink timing delay T_{cell} the relative timing of P-CCPCH and HS-SCCH, the HS-SCCH and HS-PDSCH, and the HS-PDSCH and the HS-DPCCH is illustrated in Figure 4 to Figure 6.

Based on the existing timing relations, Figure 7 illustrates the HARQ timing budget for the UE and NodeB. It should be noted that the propagation delay Tₚ has been ignored; if one also were to account for the propagation delay, the HARQ time budget of the NodeB would be 4.5 - 2Tₚ slots.

### HS-DPCCH for multi-flow HSDPA

Having described the timing and HARQ budget for legacy operation, this section focuses on the HS-DPCCH design for multi-flow HSDPA transmissions. Two main alternatives are described:
- Joint HS-DPCCH encoding
- Sector based HS-DPCCH encoding

For the sake of simplicity we restrict the discussion to the case where the UE only is configured with two cells and where the two cells do not have the same timing. It is however straightforward to extend the principles to scenarios where the UE is configured with multiple cells per sector (as long as all cells transmitted on the same sector have identical timing).

### Joint HS-DPCCH encoding

It is assumed that if a solution based on joint HS-DPCCH encoding is used, the UE always pairs the two HS-PDSCH TTIs that result in maximum overlap.

Assumption: The UE always pair the two HS-PDSCH with maximum overlap.

Under this assumption, the maximum relative time difference between the two HS-PDSCH can be 1.5 slots. This, as noted in the study item, translates into a reduction of 1.5 slot of the existing HARQ budget. This corresponds to a reduced HARQ time budget by 33 and 20 percent for the NodeB and UE, respectively. One example where the NodeB have to accommodate the entire HARQ time budget reduction is illustrated in Figure 8. From a NodeB point of view, the existing HARQ budget of 4.5 slots during which it is supposed to do HARQ-ACK decoding, scheduling for the upcoming TTI and allocating the hardware resources is challenging. Further, considering networks in which baseband hotels are used and where the entire or part of the baseband functionality is located in a different location than the radio heads, we see a reduced HARQ time budget at the NodeB as highly undesirable. Thus, in our view, the majority of the reduction would have to be taken by the UE's existing HARQ budget if a solution based on joint HS-DPCCH encoding would be adopted.

The main benefit of this approach is that the existing multi-carrier HSDPA solutions can be reused and that the UE only is required to change its transmissions once per slot. However, this will come at the expense of a significantly reduced HARQ time budget. Furthermore, it is not clear that a solution based on joint HARQ-ACK can support the inter-site case when MIMO is configured at one or more of the cells. This is because the Rel-9 Dual Cell-HSDPA with MIMO codebook is based on that receiver has knowledge of the number of the number of HS-DSCH packets that were transmitted.

### Sector-based HS-DPCCH encoding

Another HS-DPCCH design would be to let each downlink cell (sector) have a separate HS-DPCCH. This approach is straightforward to extend to cover DF-QC-HSDPA. One of the main advantage with this approach would be that it does not require any reduction of the HARQ time budget for the UE or NodeB. This is further illustrated in Figure 10 for the same scenario as considered in Figure 8.

For each of the two HS-DPCCHs the existing HS-DPCCH coding can be reused. To exemplify, if a UE for a certain sector only has a single cell configured the HS-DPCCH encoding for this cell can reuse the Rel-5 encoding. Similarly, if a UE for a certain sector has two cells (without MIMO) configured, the HS-DPCCH for these cells can be based on the Rel-8 encoding.

Note that this approach will conserve the HARQ budget for both the UE and the NodeB. In our view, this is a strong argument for favouring a solution based on two HS-DPCCHs. Furthermore, this approach would allow that the existing HARQ-ACK codebook can be reused also when the cells are configured MIMO operation.

Yet an additional benefit of this approach is that it avoids introducing new events for reporting timing drifts if the cells have different time references.

A possible drawback of the solution relying on two HS-DPCCHs would be that it will be associated with a larger cubic metric. The impact of using transmission on two HS-DPCCHs has been studied in other scenarios both within Rel-8 and Rel-10; see e.g. the Work Item R1-082324 Uplink Control Channel for Dual-Cell HSDPA presented during the 3GPP TSG RAN WG1 Meeting #53bis in Warsaw, Poland, June 30 - July 4, 2008. The general conclusion from these discussions has been that there is a drawback on the cubic metric if two I/Q multiplexed HS-DPCCHs are used if the uplink data rate is low. However, since the cubic metric only impacts the UE if the UE is power limited (close to its maximum transmit power), the scenario that a UE is power limited at the same time as it is transmitting with a small uplink data rate may be relatively unlikely. The impact on cubic should however be further evaluated.

### Conclusions

In this contribution, we discussed the HS-DPCCH design for multi-flow HSDPA. Two solutions were outlined. In the first alternative, a single HS-DPCCH was used for carrying the HARQ and PCI/CQI information for all cells. In our view, this solution has two considerable drawbacks. First and foremost, it will reduce the HARQ time budget with 1.5 slots. The second drawback is that will require that new events are introduced for handling time drifts if the cells use different clocks. The other alternative is based on a feature that the UE transmit two HS-DPCCHs; each carrying the HARQ and PCI/CQI or similar feedback information associated with (all) cells in a sector that use the downlink timing of the respective sector.

## Claims

1. A method of transmitting feedback information from a mobile terminal in a wireless communication system, the feedback information relating to multi-flow High-Speed Downlink Packet Access, HSDPA, transmissions to the mobile terminal from cells belonging to multiple cell sectors, hereafter referred to as sectors, **characterized in that**
said method comprises the step of transmitting (S1) multiple High-Speed Dedicated Physical Control Channels, HS-DPCCHs, one HS-DPCCH for each sector, wherein different HS-DPCCH channels are used to carry feedback information for cells that belong to different sectors.

2. The method of claim 1, wherein the timing used for each HS-DPCCH is coupled to the timing associated with the downlink cell(s) of the sector for which the HS-DPCCH is carrying feedback information.

3. The method of claim 1 or 2, wherein the multiple HS-DPCCHs have different timing.

4. The method of any of the claims 1 to 3, wherein, for each HS-DPCCH, the timing of the HS-DPCCH is set in relation to the received High-Speed Physical Downlink Shared Channel, HS-PDSCH, from the respective sector.

5. The method of any of the claims 1 to 4, wherein feedback information related to cells on the same sector are transmitted on the HS-DPCCH corresponding to that sector.

6. A mobile terminal (1; 101) configured to receive multi-flow High-Speed Downlink Packet Access, HSDPA, transmissions from cells belonging to multiple cell sectors, hereafter referred as sectors, and transmitting feedback information relating to said HSDPA transmissions, **characterized in that**
said mobile terminal is configured to transmit multiple High-Speed Dedicated Physical Control Channels, HS-DPCCHs, one HS-DPCCH for each sector, wherein different HS-DPCCH channels are used to carry feedback information for cells that belong to different sectors.

7. The mobile terminal of claim 6, wherein said mobile terminal is configured such that the timing used for each HS-DPCCH is coupled to the timing associated with the downlink cell(s) of the sector for which the HS-DPCCH is carrying feedback information.

8. The mobile terminal of claim 6 or 7, wherein said mobile terminal is configured to transmit the multiple HS-DPCCHs with different timing.

9. The mobile terminal of any of the claims 6 to 8, wherein said mobile terminal is configured to transmit feedback information related to cells on the same sector on the HS-DPCCH corresponding to that sector.

10. A network node (1; 201) adapted to configure a mobile terminal to transmit feedback information in a wireless communication system, the feedback information relating to multi-flow High-Speed Downlink Packet Access, HSDPA, transmissions to the mobile terminal from cells belonging to multiple cell sectors, hereafter referred to as sectors, **characterized in that** said network node is adapted to configure said mobile terminal to transmit multiple High-Speed Dedicated Physical Control Channels, HS-DPCCHs, one HS-DPCCH for each sector, wherein different HS-DPCCH channels are used to carry feedback information for cells that belong to different sectors.

11. The network node of claim 10, wherein said network node is adapted to allow configuration of the timing of each HS-DPCCH to be coupled to the downlink timing for the downlink cell(s) for which the HS-DPCCH is carrying feedback information.

12. The network node of claim 10 or 11, wherein said network node is adapted to allow configuration, for each HS-DPCCH, of the timing of the HS-DPCCH in relation to the received High-Speed Physical Downlink Shared Channel, HS-PDSCH, from the respective sector.

## Patentansprüche

1. Verfahren zum Übertragen von Rückkopplungsinformationen von einem mobilen Endgerät in einem drahtlosen Kommunikationssystem, wobei die Rückkopplungsinformationen Multi-Flow-Hochgeschwindigkeits-Downlink-Paketzugriffs-(High-Speed Downlink Packet Access - HSDPA)-Übertragungen an das mobile Endgerät von Zellen, die zu mehreren Zellsektoren gehören, im Folgenden als Sektoren bezeichnet, betreffen, **dadurch gekennzeichnet, dass**
das Verfahren den Schritt des Übertragens (S1) mehrerer dedizierter physischer Hochgeschwindigkeitssteuerkanäle, HS-DPCCHs, eines HS-DPCCH für jeden Sektor, umfasst, wobei unterschiedliche HS-DPCCH-Kanäle zum Übermitteln von Rückkopplungsinformationen für Zellen, die zu unterschiedlichen Sektoren gehören, verwendet werden.

2. Verfahren nach Anspruch 1, wobei die Zeitsteuerung, die für die jeweiligen HS-DPCCH verwendet wird, an die Zeitsteuerung gekoppelt ist, die der/den Downlink-Zelle(n) des Sektors, für den der HS-DPCCH Rückkopplungsinformationen übermittelt, zugeordnet ist.

3. Verfahren nach Anspruch 1 oder 2, wobei die mehreren HS-DPCCHs unterschiedliche Zeitsteuerungen aufweisen.

4. Verfahren nach einem der Ansprüche 1 bis 3, wobei für jeden HS-DPCCH die Zeitsteuerung des HS-DPCCH in Bezug auf den aus dem entsprechenden Sektor empfangenen geteilten physischen Hochgeschwindigkeits-Downlink-Kanal, HS-PDSCH, eingestellt wird.

5. Verfahren nach einem der Ansprüche 1 bis 4, wobei Rückkopplungsinformationen bezüglich Zellen desselben Sektors auf dem HS-DPCCH, der dem Sektor entspricht, übertragen werden.

6. Mobiles Endgerät (1; 101), das dazu konfiguriert ist, Multi-Flow-Hochgeschwindigkeits-Downlink-Paketzugriffs-HSDPA-Übertragungen von Zellen, die zu mehreren Zellsektoren, im Folgenden als Sektoren bezeichnet, gehören, zu empfangen und Rückkopplungsinformationen bezüglich den HSDPA-Übertragungen überträgt, **dadurch gekennzeichnet, dass**
das mobile Endgerät dazu konfiguriert ist, mehrere dedizierte physische Hochgeschwindigkeitssteuerkanäle, HS-DPCCHs, einen HS-DPCCH für jeden Sektor, zu übertragen, wobei unterschiedliche HS-DPCCH-Kanäle zum Übermitteln von Rückkopplungsinformationen für Zellen, die zu unterschiedlichen Sektoren gehören, verwendet werden.

7. Mobiles Endgerät nach Anspruch 6, wobei das mobile Endgerät derart konfiguriert ist, dass die für den jeweiligen HS-DPCCH verwendete Zeitsteuerung an die Zeitsteuerung gekoppelt ist, die der/den Downlink-Zelle(n) des Sektors, für den der HS-DPCCH Rückkopplungsinformationen übermittelt, zugeordnet ist.

8. Mobiles Endgerät nach Anspruch 6 oder 7, wobei das mobile Endgerät dazu konfiguriert ist, mehrere HS-DPCCHs mit unterschiedlicher Zeitsteuerung zu übertragen.

9. Mobiles Endgerät nach einem der Ansprüche 6 bis 8, wobei das mobile Endgerät dazu konfiguriert ist, Rückkopplungsinformationen bezüglich Zellen desselben Sektors auf dem HS-DPCCH zu übertragen, der dem Sektor entspricht.

10. Netzwerkknotenpunkt (1; 201), der dazu eingerichtet ist, ein mobiles Endgerät dazu zu konfigurieren, Rückkopplungsinformationen in einem drahtlosen Kommunikationssystem zu übertragen, wobei die Rückkopplungsinformationen Multi-Flow-Hochgeschwindigkeits-Downlink-Paketzugriffs-HSDPA-Übertragungen an das mobile Endgerät von Zellen, die zu mehreren Zellsektoren, im Folgenden als Sektoren bezeichnet, gehören, betreffen, **dadurch gekennzeichnet, dass**
der Netzwerkknotenpunkt dazu eingerichtet ist, das mobile Endgerät dazu zu konfigurieren, mehrere dedizierte physische Hochgeschwindigkeitssteuerkanäle, HS-DPCCHs, einen HS-DPCCH für jeden Sektor, zu übertragen, wobei unterschiedliche HS-DPCCH-Kanäle zum Übermitteln von Rückkopplungsinformationen für Zellen, die zu unterschiedlichen Sektoren gehören, verwendet werden.

11. Netzwerkknotenpunkt nach Anspruch 10, wobei der Netzwerkknotenpunkt dazu eingerichtet ist, es zu ermöglichen, dass die Konfiguration der Zeitsteuerung eines jeweiligen HS-DPCCH an die Downlink-Zeitsteuerung für die Downlink-Zelle(n), für die der HS-DPCCH Rückkopplungsinformationen übermittelt, gekoppelt ist.

12. Netzwerkknotenpunkt nach Anspruch 10 oder 11, wobei der Netzwerkknotenpunkt dazu eingerichtet ist, für jeden HS-DPCCH eine Konfiguration der Zeitsteuerung des HS-DPCCH in Bezug auf den von dem entsprechenden Sektor empfangenen geteilten physischen Hochgeschwindigkeits-Downlink-Kanal, HS-PDSCH, zu ermöglichen.

## Revendications

1. Procédé de transmission d' informations de retour à partir d'un terminal mobile dans un système de communication sans fil, les informations de retour se rapportant à des transmissions à accès par paquets de liaison descendante haut débit multi-flux, HSDPA, vers le terminal mobile à partir de cellules appartenant à de multiples secteurs cellulaires, ci-après appelés secteurs, **caractérisé en ce que**
ledit procédé comprend l'étape de transmission (S1) de multiples canaux de commande physique dédiés haut débit, HS-DPCCH, un HS-DPCCH pour chaque secteur, dans lequel différents canaux HS-DPCCH sont utilisés pour acheminer des informations de retour pour des cellules appartenant à différents secteurs.

2. Procédé selon la revendication 1, dans lequel la synchronisation utilisée pour chaque HS-DPCCH est couplée à la synchronisation associée à la ou aux cellules de liaison descendante du secteur pour lequel le HS-DPCCH achemine des informations de retour.

3. Procédé selon la revendication 1 ou 2, dans lequel les multiples HS-DPCCH ont une synchronisation différente.

4. Procédé selon l'une quelconque des revendications 1 à 3, dans lequel, pour chaque HS-DPCCH, la synchronisation du HS-DPCCH est établie par rapport au canal partagé de liaison descendante physique haut débit, HS-PDSCH, à partir du secteur respectif.

5. Procédé selon l'une quelconque des revendications 1 à 4, dans lequel des informations de retour concernant des cellules sur le même secteur sont transmises sur le HS-DPCCH correspondant à ce secteur.

6. Terminal mobile (1 ; 101) conçu pour recevoir des transmissions à accès par paquets de liaison descendante haut débit multi-flux, HSDPA, à partir de cellules appartenant à de multiples secteurs cellulaires, ci-après appelés secteurs, et transmettant des informations de retour concernant lesdites transmissions HSDPA, **caractérisé en ce que**
ledit terminal mobile est conçu pour transmettre de multiples canaux de commande physique dédiés haut débit, HS-DPCCH, un HS-DPCCH pour chaque secteur, dans lequel différents canaux HS-DPCCH sont utilisés pour acheminer des informations de retour pour des cellules appartenant à différents secteurs.

7. Terminal mobile selon la revendication 6, dans lequel ledit terminal mobile est conçu de sorte que la synchronisation utilisée pour chaque HS-DPCCH est couplée à la synchronisation associée à la ou aux cellules de liaison descendante du secteur pour lequel le HS-DPCCH achemine des informations de retour.

8. Terminal mobile selon la revendication 6 ou 7, dans lequel ledit terminal mobile est conçu pour transmettre les multiples HS-DPCCH avec une synchronisation différente.

9. Terminal mobile selon l'une quelconque des revendications 6 à 8, dans lequel ledit terminal mobile est conçu pour transmettre des informations de retour concernant des cellules sur le même secteur sur le HS-DPCCH correspondant à ce secteur.

10. Noeud de réseau (1 ; 201) conçu pour configurer un terminal mobile pour transmettre des informations de retour dans un système de communication sans fil, les informations de retour se rapportant à des transmissions à accès par paquets de liaison descendante haut débit multi-flux, HSDPA, vers le terminal mobile à partir de cellules appartenant à de multiples secteurs cellulaires, ci-après appelés secteurs, **caractérisé en ce que**
ledit noeud de réseau est conçu pour configurer ledit terminal mobile pour transmettre de multiples canaux de commande physique dédiés haut débit, HS-DPCCH, un HS-DPCCH pour chaque secteur, dans lequel différents canaux HS-DPCCH sont utilisés pour acheminer des informations de retour pour des cellules appartenant à différents secteurs.

11. Noeud de réseau selon la revendication 10, dans lequel ledit noeud de réseau est conçu pour permettre la configuration de la synchronisation de chaque HS-DPCCH à coupler à la synchronisation de liaison descendante pour la ou les cellules de liaison descendante pour laquelle/lesquelles le HS-DPCCH achemine des informations de retour.

12. Noeud de réseau selon la revendication 10 ou 11, dans lequel ledit noeud de réseau est conçu pour permettre la configuration, pour chaque HS-DPCCH, de la synchronisation du HS-DPCCH par rapport au canal partagé de liaison descendante physique haut débit, HS-PDSCH, à partir du secteur respectif.
